# EUROPÄISCHE PATENTSCHRIFT

(11) **EP 1 044 580 B1**
(45) Veröffentlichungstag und Bekanntmachung des Hinweises auf die Patenterteilung: **24.07.2002**
(21) Anmeldenummer: 98958800.9
(22) Anmeldetag: 01.10.1998
(51) Int. Cl.: H04Q 7/38

(54) **VERFAHREN UND FUNK-KOMMUNIKATIONSSYSTEM ZUR ZUWEISUNG EINES FREQUENZKANALS AN EINE FUNKSTATION**
RADIOCOMMUNICATION METHOD AND SYSTEM FOR ASSIGNING A FREQUENCY CHANNEL TO A RADIO STATION
PROCEDE ET SYSTEME DE RADIOCOMMUNICATION POUR L'ASSIGNATION D'UN CANAL DE FREQUENCES A UNE STATION RADIO

(30) Priorität: 17.10.1997 DE 19746082
(43) Veröffentlichungstag der Anmeldung: 18.10.2000
(73) Patentinhaber: SIEMENS AKTIENGESELLSCHAFT, 80333 München (DE)
(72) Erfinder: FÄRBER, Michael, D-82515 Wolfratshausen (DE); KLEIN, Anja, D-10709 Berlin (DE); LÜDERS, Christian, D-85540 Haar (DE)
(86) Internationale Anmeldenummer: DE9802922
(87) Internationale Veröffentlichungsnummer: WO9921385

(56) Entgegenhaltungen:
- EP-A- 0 641 093
- GB-A- 2 311 910
- US-A- 5 497 505

## Beschreibung

Die Erfindung betrifft ein Verfahren und ein Funk-Kommunikationssystem zur Zuweisung eines Frequenzkanals an eine Funkstation, insbesondere für Funk-Kommunikationssysteme, die mehrere ggf. nicht zusammenhängende Frequenzbänder umfassen, sowie entsprechende Funkstation.

In der GB 2 311 910 A ist ein Verfahren nach dem Oberbegriff des Anspruchs 1 sowie ein Funk-Kommunikationssystem nach dem Oberbegriff des Anspruchs 10 und eine Funkstation nach dem Oberbegriff des Anspruchs 13 beschrieben.

In Funk-Kommunikationssystemen werden Nachrichten (beispielsweise Sprache, Bildinformation oder andere Daten) mit Hilfe von elektromagnetischen Wellen übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900 MHz, 1800 MHz oder 1900 MHz, wobei weitere Standards (NMT, IS-95, u.s.w.) wiederum gleiche oder zusätzliche Frequenzbänder nutzen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Zwischen einer sendenden und einer empfangenden Funkstation besteht eine Funkschnittstelle, über die mit Hilfe der elektromagnetischen Wellen eine Datenübertragung stattfindet. Aus DE 197 33 336 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. Empfangsseitig wird ein JD-Verfahren (Joint Detection) angewendet, um unter Kenntnis von Spreizcodes mehrerer Teilnehmer eine verbesserte Detektion der übertragenen Daten vorzunehmen.

Es ist aus dem GSM-Mobilfunknetz bekannt, daß zur Zuweisung eines Frequenzkanals an eine Mobilstation eine Nummer von einer Basisstation an die Mobilstation gesendet wird, die als Vielfaches der festen Standardbandbreite von 200 kHz, den zu wählenden Frequenzkanal in Aufwärtsrichtung beispielsweise innerhalb des Frequenzbandes von 890 - 915 MHz für GSM900 die Nummern 0..123 bezeichnet. Diese Nummerierung ist nur für dieses Frequenzband und für das GSM1800 Frequenzband mit Nummern 512..885 gültig, in anderen GSM-Frequenzbändern, beispielsweise für PCS1900 oder für Mobilfunknetze mit anderen Übertragungsverahren ist das Nummerierungsschema nicht eindeutig, oder in anderen Standards anderweitig definiert.

Dies führt bei Multimode-Mobilstationen oder bei zukünftigen Mobilstationen der dritten Mobilfunkgeneration zu Mehrdeutigkeiten, da mehrere Frequenzbänder zur Verfügung stehen und ggf. unterschiedliche Bandbreiten der Frequenzkanäle angeboten werden.

Der Erfindung liegt somit die Aufgabe zugrunde, ein Verfahren und ein Funk-Kommunikationssystem anzugeben, die die Zuweisung eines Frequenzkanals an eine Mobilstation vereinfachen. Diese Aufgabe wird durch das Verfahren mit den Merkmalen des Patentanspruchs 1, das Funk-Kommunikationssystem mit den Merkmalen des Patentanspruches 10 und die Funkstation nach Anspruch 13 gelöst. Vorteilhafte Weiterentwicklungen sind den Unteransprüchen zu entnehmen.

Beim erfindungsgemäßen Verfahren zur Zuweisung eines Frequenzkanals an eine Funkstation eines Funk-Kommunikationssystems wird von einer ersten Funkstation eine Signalisie rungsmeldung an eine zweite Funkstation gesendet, wobei die Signalisierungsmeldung Informationen über eine Nummer des Frequenzkanals und eine Bandbreite des Frequenzkanals enthält und wobei sowohl die Nummer des Frequenzkanals als auch die Bandbreite des Frequenzkanals auf eine gemeinsame Standardbandbreite bezogen sind. Die Signalisierungsmeldung wird von der zweiten Funkstation empfangen und der signalisierte Frequenzkanal zum Senden oder Empfangen benutzt. Die Angaben über die Nummer und die Bandbreite des Frequenzkanals geben auch bei Funk-Kommunikationssystemen mit mehreren nicht zusammenhängenden Frequenzbändern in eindeutiger Weise den zu verwendeten Frequenzkanal an. Das Übertragungsverfahren in den einzelnen Frequenzbändern ist dabei beliebig. Ein weiterer Vorteil besteht darin, daß nicht von einer einzigen Bandbreite, die vorab definiert ist ausgegangen werden muß, sondern die Bandbreite nach entsprechender Anforderung zugeteilt und signalisiert werden kann. Die Zuweisung wird damit wesentlich flexibler.

Nach einer vorteilhafter Ausgestaltung ist die Bandbreite gleich der Standardbandbreite oder ein Vielfaches davon. Damit vereinfacht sich die Signalisierung, da die Bandbreite durch eine ganze mit der Standardbandbreite zu multiplizierende Zahl signalisiert werden kann. Die zweite Funkstation wählt gemäß einer weiteren Ausprägung der Erfindung die Standardbandbreite als zu benutzende Bandbreite aus, falls die Information über die Bandbreite in der Signalisierungsmeldung fehlt. Dies ist insbesondere für eine Abwärtskompatibilität von Komponenten verschiedener Generationen von Funk-Kommunikationssystemen von Bedeutung. So kann beispielsweise eine Basisstation eines GSM-Mobilfunknetzes weiterhin eine nur die Nummer des Frequenzbandes angebende Zahl senden, die auch von Mobilstationen verarbeitet werden, die erfindungsgemäße Zuweisungen des Frequenzkanals erwarten. Das erfindungsgemäße Schema kann also in vorhandene Signalisierungsmechanismen implementiert werden.

Nach einer weiteren vorteilhaften Ausgestaltung der Erfindung gibt die Nummer einen Frequenzkanal an, der einen Abstand von einer Bezugsfrequenz hat, der gleich der Standardbandbreite oder einem Vielfachen davon ist. Damit ist es möglich, die Signalisierung auf ganze Zahlen zu beschränken, die mit der Standardbandbreite multipliziert und mit der Bezugsfrequenz als Offset versehen, den Frequenzkanal eindeutig beschreiben.

Die Nummer gibt dabei den Beginn (kleinste oder größte Frequenz) des Frequenzkanals oder die Mitte des Frequenzkanals an. Die Bezugsfrequenz kann zusätzlich signalisiert werden, doch ist sie vorteilhafterweise in beiden Funkstationen definiert und gespeichert. Damit entfällt weiterer Signalisierungsaufwand. Die Nummerierung eines Frequenzbandes muß dabei nicht bei Null beginnen, sondern vorgebbare Nummernbereiche können vorteilhafterweise auch einzelnen Frequenzbereichen zugeordnet sein.

Für die Festlegung der Standardbandbreite gibt es mehrere Möglichkeiten. Wird eine Migration vom GSM-Mobilfunknetz angestrebt, so ist die Standardbandbreite vorteilhafterweise gleich 200 kHz. Sollen weitere Netze einbezogen werden, die eine kleinere Bandbreite der Frequenzkanäle verwenden, so ist es vorteilhaft, daß die Standardbandbreite gleich der kleinsten der Trägerbandbreiten unterschiedlicher Funk-Kommunikationsnetze ist. Sind die unterschiedlichen zu verwendenten Bandbreiten nicht auf einen kleinsten gemeinsamen Teiler zurückzuführen, so ist die Standardbandbreite gleich der häufigsten zu erwartenden Bandbreite. Damit wird für diese am häufigsten auftretenden Fälle, die Signalisierung am einfachsten. Es kann alternativ die Bandbreite auch als eine Auswahl aus mehreren zur Verfügung stehenden Bandbreiten signalisiert werden. Stehen nur wenige Bandbreiten zur Auswahl, sind nur wenige Bits zur Signalisierung nötig.

Ausführungsbeispiele der Erfindung werden anhand der beiliegenden Zeichnungen näher erläutert.

Dabei zeigen
- FIG 1: ein Blockschaltbild eines Mobilfunknetzes,
- FIG 2,3,4: Untergliederungen der Frequenzbänder des Funk-Kommunikationssystems,
- FIG 5: eine schematische Darstellung der Rahmenstruktur der Funkschnittstelle,
- FIG 6: eine schematische Darstellung des Aufbaus eines Funkblocks,
- FIG 7: den Aufbau einer Signalisierungsmeldung, und
- FIG 8: den Ablauf der Zuweisung eines Frequenzkanals.

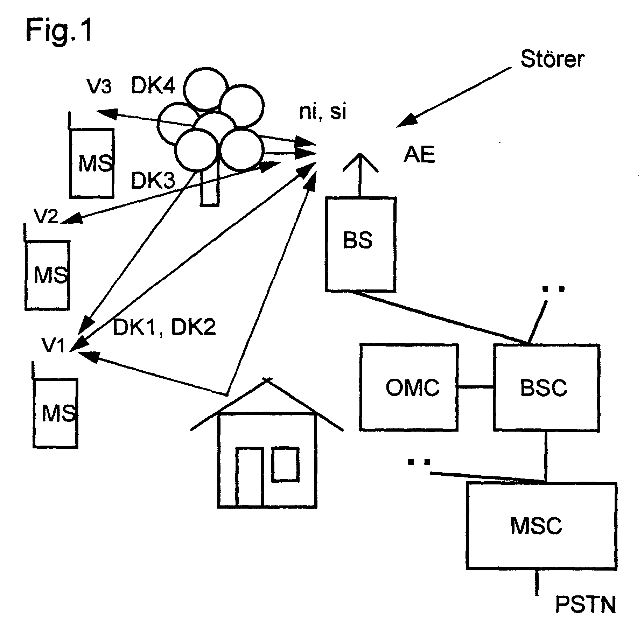

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Funkverbindung zu Mobilstationen MS aufbauen kann.

In FIG 1 sind beispielhaft drei Funkverbindungen V1..V3 zur Übertragung von Nutzinformationen ni und Signalisierungsinformationen si zwischen drei Mobilstationen MS und einer Basisstation BS dargestellt, wobei einer Mobilstation MS zwei Datenkanäle DK1 und DK2 und den anderen Mobilstationen MS jeweils ein Datenkanal DK3 bzw. DK4 zugeteilt sind. Ein Operations- und Wartungszentrum OMC realisiert Kontroll- und Wartungsfunktionen für das Mobilfunknetz bzw. für Teile davon. Die Funktionalität dieser Struktur wird vom Funk-Kommunmikationssystem nach der Erfindung genutzt; sie ist jedoch auch auf andere Funk-Kommunikationssysteme übertragbar, in denen die Erfindung zum Einsatz kommen kann.

Die Basisstation BS ist mit einer Antenneneinrichtung AE verbunden, die z.B. aus drei Einzelstrahlern besteht. Jeder der Einzelstrahler strahlt gerichtet in einen Sektor der durch die Basisstation BS versorgten Funkzelle. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (space division multiple access) eingesetzt werden kann.

Die Basisstation BS stellt den Mobilstationen MS Organisationsinformationen über den Aufenthaltsbereich (LA location area) und über die Funkzelle (Funkzellenkennzeichen) zur Verfügung. Die Organisationsinformationen werden gleichzeitig über alle Einzelstahler der Antenneneinrichtung abgestrahlt.

Die Verbindungen V1..V3 mit den Nutzinformationen ni und Signalisierungsinformationen si zwischen der Basisstation BS und den Mobilstationen MS unterliegen einer Mehrwegeausbreitung, die durch Reflektionen beispielsweise an Gebäuden zusätzlich zum direkten Ausbreitungsweg hervorgerufen werden. Geht man von einer Bewegung der Mobilstationen MS aus, dann führt die Mehrwegeausbreitung zusammen mit weiteren Störungen dazu, daß bei der empfangenden Mobilstation MS sich die Signalkomponenten der verschiedenen Ausbreitungswege eines Teilnehmersignals zeitabhängig überlagern. Weiterhin wird davon ausgegangen, daß sich die Teilnehmersignale verschiedener Basisstationen BS am Empfangsort zu einem Empfangssignal rx in einem Frequenzkanal überlagern.

Damit die. Verbindungen V1..V3 mit den Nutzinformationen ni und Signalisierungsinformationen si aufgebaut und aufrechterhalten werden können, ist eine Zuweisung eines Frequenzkanals nötig. Eine Frequenzkanal wird im folgenden nur durch die zu verwendente Trägerfrequenz und die Bandbreite bezeichnet. Eine Zuweisung eines Zeitschlitzes und/oder eines CDMA-Codes wird wird hier nicht gesondert beschrieben. Die Signalisierung zur Zuweisung von Frequenzkanälen wird ebenso von Handovermeldungen und von einer Bekanntgabe von Frequenzkanälen im Sinne von Organisationsinformationen benutzt.

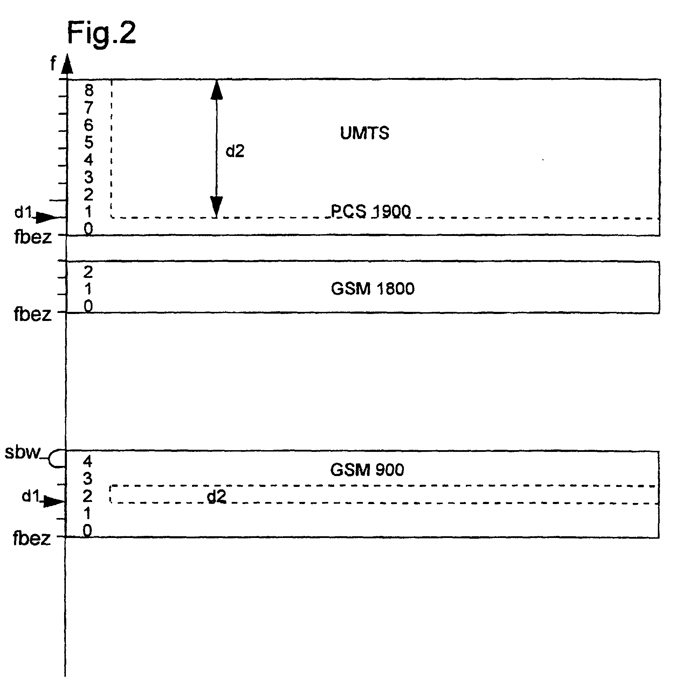

Der Frequenzkanal wird einem Frequenzspektrum nach FIG 2 bis FIG 4 entnommen. In den Figuren sind mehrere Frequenzbänder angegeben, die vom Funk-Kommunikationssystem genutzt werden. Diese Frequenzbänder hängen nicht zusammen, wobei auch zusammenhängende Frequenzbänder erfindungsgemäß dargestellt werden können. Es ist anzumerken, daß die unterschiedlichen Frequenzbänder nicht zwangsweise einem Mobilfunknetz oder einem Standard zugeordnet sein müssen. Es sind beliebige Zuteilungen möglich. In den Ausführungsbeispielen wird auf eine Lösung Bezug genommen, die die Frequenzbänder von GSM 900, GSM1800, PCS1900 und UMTS umfaßt.

Eine Standardbandbreite sbw ist mit 200 kHz festgelegt, die der definierten Bandbreite des GSM-Mobilfunkstandards entspricht. Weiterhin ist eine Bezugsfrequenz fbez definiert, die in FIG 2 in jedem Frequenzband der kleinsten verwendbaren Frequenz entspricht. Innerhalb der verwendbaren Frequenzbänder sind die Frequenzkanäle in 200-kHz-Schritten durchnummeriert. Zwei konkrete Frequenzkanäle sind in FIG 2 hervorgehoben. Ein erster Frequenzkanal liegt im GSM 900 Band. Er hat eine Bandbreite d2 von 200 kHz und die Nummer d1 = 2. Ein zweiter Frequenzkanal liegt im UMTS Band mit einer Bandbreite von d2 = 8 mal 200 kHz beginnend mit der Nummer d1 = 1. Die Nummer d1 der Frequenzkanäle gibt dabei die kleinste Frequenz des Frequenzkanals an.

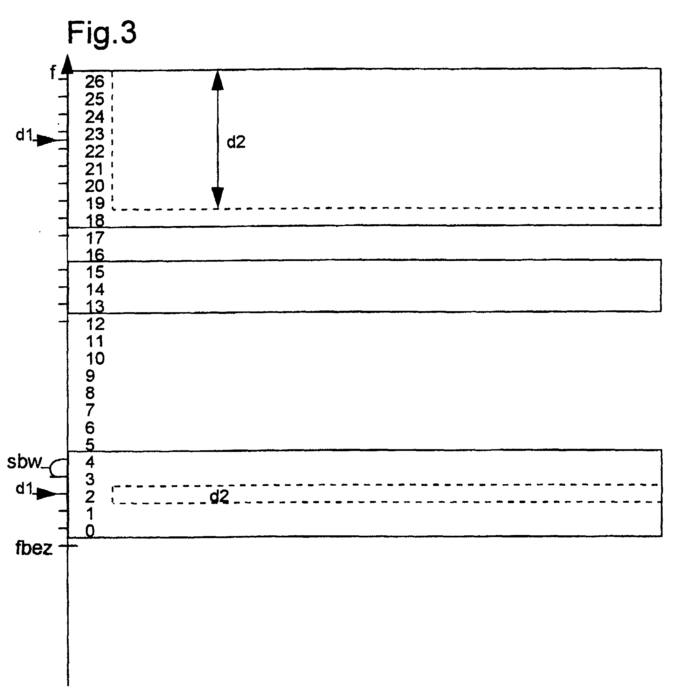

In FIG 3 erfolgt eine durchgehende Nummerierung aller Frequenzkanäle, die die nicht nutzbaren Lücken zwischen den Frequenzbändern einschließt. Weiterhin unterscheidet sich diese Lösung dadurch, daß die Bezugsfrequenz fbez die Mitte eines Frequenzbandes mit Standardbandbreite sbw bezeichnet. Wiederum sind zwei Frequenzkanäle hervorgehoben. Die Nummer d1 des Frequenzkanal gibt dabei allerdings die Mittenfrequenz des Frequenzkanals an.

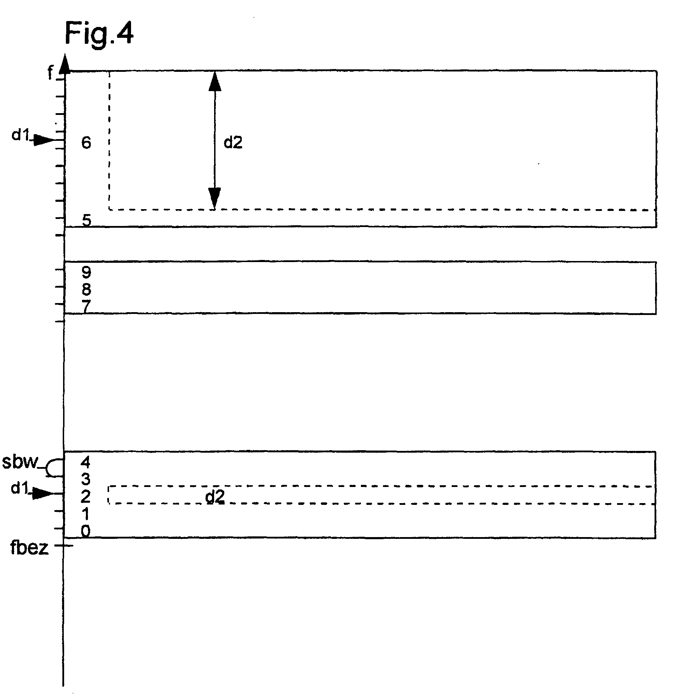

In FIG 4 erfolgt die Nummerierung der Frequenzkanäle derart, daß die Lücken ausgeschlossen sind und die Nummervergabe sich an bestehenden Mobilfunknetzen, siehe GSM900 und GSM1800, orientiert, d.h. Lücken im bestehenden Nummerierungssystem genutzt werden. Dabei kann die Nummer d1 des Frequenzkanals auch eindeutig desses Bandbreite d2 festlegen. Beispielsweise implizieren die Nummern d1 = 0 bis 5 und 7 bis 9 eine Bandbreite von d2 = 200 kHz und die Nummer d1 = 6 eine Bandbreite von d2 = 1,6 MHz.

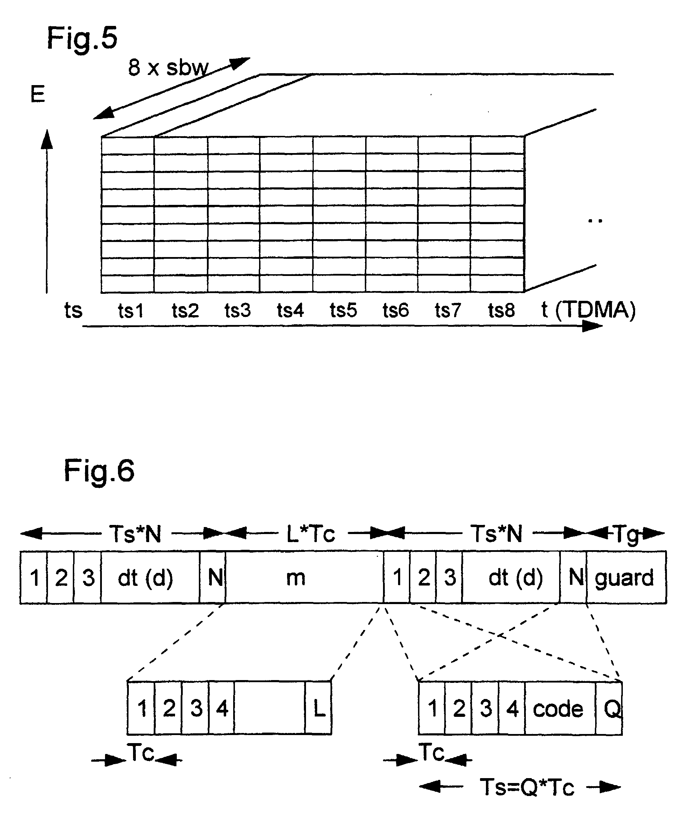

Die Rahmenstruktur der Funkschnittstelle für eine FDMA/TDMA/CDMA-Übertragungsverfahren, für das die Erfindung besonders vorteilhaft einsetzbar ist, ist aus FIG 5 ersichtlich. Gemäß einer TDMA-Komponente ist eine Aufteilung eines breitbandigen Frequenzbereiches, beispielsweise der Bandbreite 8 x sbw = 1,6 MHz, in mehrere Zeitschlitze ts, beispielsweise 8 Zeitschlitze ts1 bis ts8 vorgesehen. Innerhalb der Frequenzkanäle, die zur Nutzdatenübertragung vorgesehen sind, werden Informationen mehrerer Verbindungen in Funkblöcken übertragen. Gemäß einer FDMA (Frequency Division Multiple Access)-Komponente sind dem Funk-Kommunikationssystem mehrere Frequenzbereiche zugeordnet.

Gemäß FIG 6 bestehen diese Funkblöcke zur Nutzdatenübertragung aus Datenteilen mit Datensymbolen d, in denen Abschnitte mit empfangsseitig bekannten Mittambeln m eingebettet sind. Die Daten d sind verbindungsindividuell mit einer Feinstruktur, einem Speizcode, gespreizt, so daß empfangsseitig beispielsweise K Datenkanäle DK1, DK2, DK3,.. DKK durch diese CDMA-Komponente separierbar sind. Jeden dieser Datenkanäle DK1, DK2, DK3,.. DKK wird sendeseitig pro Symbol eine bestimmte Energie E zugeordnet.

Die Spreizung von einzelnen Symbolen der Daten d mit Q Chips bewirkt, daß innerhalb der Symboldauer Ts Q Subabschnitte der Dauer Tc übertragen werden. Die Q Chips bilden dabei den individuellen Spreizkode. Die Mittambel m besteht aus L Chips, ebenfalls der Dauer Tc. Weiterhin ist innerhalb des Zeitschlitzes ts eine Schutzzeit guard der Dauer Tg zur Kompensation unterschiedlicher Signalaufzeiten der Verbindungen aufeinanderfolgender Zeitschlitze ts vorgesehen. Diese Struktur der Funkschnittstelle hat den Vorteil, daß einer Verbindung ohne großen Aufwand auch mehrere Datenkanäle zugeordnet werden können. Die Mittambeln m innerhalb der Funkblöcke ermöglichen eine Kanalschätzung, wie sie aus TDMA-Systemen bekannt ist.

Innerhalb eines breitbandigen Frequenzbereiches werden die aufeinanderfolgenden Zeitschlitze ts nach einer Rahmenstruktur gegliedert. So werden acht Zeitschlitze ts zu einem Rahmen zusammengefaßt, wobei ein bestimmter Zeitschlitz des Rahmens einen Frequenzkanal zur Nutzdatenübertragung bildet und wiederkehrend von einer Gruppe von Verbindungen genutzt wird. Weitere Frequenzkanäle, beispielsweise zur Frequenzoder Zeitsynchronisation der Mobilstationen MS werden nicht in jedem Rahmen, jedoch zu einem vorgegebenen Zeitpunkt innerhalb eines Multirahmens eingeführt. Die Abstände zwischen diesen Frequenzkanälen bestimmen die Kapazität, die das Funk-Kommunikationssystem dafür zur Verfügung stellt.

Die Parameter der Funkschnittstelle sind z.B. wie folgt:

| | |
|---|---|
| Dauer eines Funkblocks | 577 µs |
| Anzahl Chips pro Mittambel m | 243 |
| Schutzzeit Tg | 32 µs |
| Datensymbole pro Datenteil N | 33 |
| Symboldauer Ts | 6,46 µs |
| Chips pro Symbol Q | 14 |
| Chipdauer Tc | 6 / 13 µs |

In Aufwärts- (MS -> BS) und Abwärtsrichtung (BS -> MS) können die Parameter auch unterschiedlich eingestellt werden.

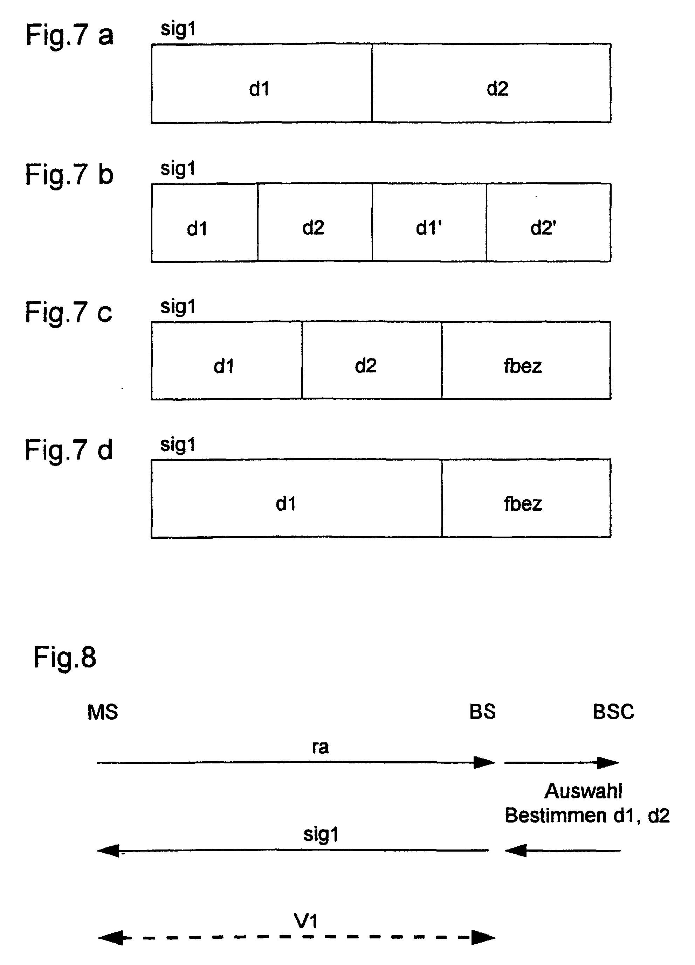

Die Zuweisung des Frequenzkanals erfolgt mittels einer Signalisierungsmeldung sig1. Diese Signalisierungsmeldung sig1 nach FIG 7a enthält zwei Datenteile d1 und d2, wobei d1 eine Nummer für den Frequenzkanal und d2 die Bandbreite als ganzes Vielfaches der Standardbandbreite sbw angeben. Die die Signalisierungsmeldung sig1 empfangende Funkstation wählt die Standardbandbreite sbw als zu benutzende Bandbreite aus, falls die Information über die Bandbreite in der Signalisierungsmeldung fehlt oder ein ungültiger Wert übertragen wurde.

Ein Meldungsaustausch zwischen den beteiligten Komponenten des Funk-Kommunikationssystems kann FIG 8 entnommen werden. Nach Erhalt der Organisationsinformationen, in denen auch Angaben über den für eine Kanalzuweisungsaufforderung zu verwendenten Frequenzkanal enthalten sind, kann die Mobilstation MS als erste Funkstation in einer Funkzelle eine Meldung ra (random access) zur Zuweisung von funktechnischen Ressourcen senden, die von der Basisstation BS empfangen und an den Basisstationscontroller BSC weitergeleitet wird. Der Basisstationscontroller BSC als Einrichtung zur Zuweisung eines Frequenzkanals an eine Funkstation wertet diese Meldung ra aus. In der Meldung ra sind Angaben über die durch die Mobilstation MS auswertbaren Frequenzbänder, sowie über die angeforderte Bandbreite oder den angeforderten Dienst enthalten, so daß der Basisstationscontroller BSC unter Beachtung dieser Anforderungen und der aktuellen Auslastung der zur Verfügung stehenden Frequenzbänder in der Funkzelle eine Zuweisung eines Frequenzbandes vornimmt. Damit werden die Nummer d1 und die Bandbreite d2 für den Frequenzkanal festgelegt.

Durch die Signalisierungsmeldung sig1 werden diese Angaben d1, d2 über die Basisstation BS an die Mobilstation MS gesendet. Nach Empfang dieser Signalisierungsmeldung sig1 benutzt die Mobilstation MS als zweite Funkstation den signalisierten Frequenzkanal für den weiteren Funkverkehr innerhalb der Verbindung V1 zum Senden und/oder mit Offset zum Empfangen.

Es ist dabei zu beachten, daß in der Signalisierungsmeldung sig1 entweder nur ein Wertepaar d1 und d2 enthalten sind, so daß der Offset für die entgegengesetzte Übertragungsrichtung wie beim GSM-Mobilfunksystem fest vorgegeben ist. Es ist jedoch alternativ (FIG 7b) möglich, auch für beide Übertragungsrichtungen eigene Werte d1, d2 und d1', d2' zu signalisieren. Wird wie in FIG 2 keine Durchnummerierung auch zwischen den Frequenzbändern vorgenommen enthält die Signalisierungsmeldung sig1 ebenfalls eine Angabe über die Bezugsfrequenz fbez (FIG 7c).

Eine weitere Möglichkeit besteht darin (FIG 7d), bereits durch die Nummer d1 einen Frequenzkanal derart zuzuweisen, daß dessen Bandbreite d2 festgelegt ist (siehe FIG 4). Das Datenfeld der Bezugsfrequenz fbez wird dabei zur Signalisierung des neuen Zuweisungsverfahrens innerhalb einer bekannten GSM-Meldung verwendet. Diese Signalsierungsmeldungen sig1 lassen sich auch innerhalb von 10 Bit der bekannten GSM-Meldungen integrieren.

Das in den Ausführungsbeispielen vorgestellte Mobilfunknetz mit einer Kombination von FDMA, TDMA und CDMA ist für Anforderungen an Systeme der 3. Generation geeignet. Insbesondere eignet es sich für eine Implementierung in bestehende GSM-Mobilfunknetze, für die ein nur geringer Änderungsaufwand nötig ist. Die Zuweisung von Frequenzkanälen kann auf bestehenden Signalisierungsmechanismen aufbauen und gleichzeitig den Anforderungen an vielfältige Funk-Kommunikationssysteme der 3. Generation gerecht werden.

## Patentansprüche

1. Verfahren zur Zuweisung eines Frequenzkanals an eine Funkstation (MS, BS) eines Funk-Kommunikationssystems,
bei dem
- von einer ersten Funkstation (BS) eine Signalisierungsmeldung (sig1) an eine zweite Funkstation (MS) gesendet wird, die eine Nummer (d1) des Frequenzkanals und eine Information über eine Bandbreite (d2) des Frequenzkanals enthält,
- die Signalisierungsmeldung (sig1) von der zweiten Funkstation (MS) empfangen wird,
- und die zweite Funkstation (MS) den signalisierten Frequenzkanal zum Senden oder Empfangen benutzt,
**dadurch gekennzeichnet,**
- **daß** sowohl die Nummer (dl) des Frequenzkanals als auch die Information über die Bandbreite (d2) des Frequenzkanals auf eine gemeinsame Standardbandbreite (sbw) bezogen sind,
- so daß sowohl die Nummer (dl) als auch die Information über die Bandbreite (d2) in Form von Multiplikatoren der Standardbandbreite (sbw) in der Signalisierungsmeldung (sig1) enthalten sind.

2. Verfahren nach Anspruch 1, bei dem
die Bandbreite (d2) gleich der Standardbandbreite (sbw) oder ein Vielfaches davon ist.

3. Verfahren nach einem der vorherigen Ansprüche, bei dem
die Nummer (d1) einen Frequenzkanal angibt, der einen Abstand von einer Bezugsfrequenz (fbez) hat, der gleich der Standardbandbreite (sbw) oder einem Vielfachen davon ist.

4. Verfahren nach Anspruch 3, bei dem
durch die Nummer (d1) der Beginn, also die kleinste oder größte Frequenz, des Frequenzkanals angegeben ist.

5. Verfahren nach Anspruch 3, bei dem
durch die Nummer (d1) die Mitte des Frequenzkanals angegeben ist.

6. Verfahren nach einem der vorherigen Ansprüche, bei dem die Bezugsfrequenz (fbez) in beiden Funkstationen (BS, MS) definiert ist.

7. Verfahren nach einem der vorherigen Ansprüche, bei dem die Standardbandbreite (sbw) gleich 200 kHz ist.

8. Verfahren nach einem der Ansprüche 1 bis 6, bei dem
die Standardbandbreite (sbw) gleich der häufigsten zu erwartenden Bandbreite ist.

9. Verfahren nach einem der Ansprüche 1 bis 6, bei dem
die Standardbandbreite (sbw) gleich der kleinsten von Trägerbandbreiten unterschiedlicher Funk-Kommunikationsnetze ist.

10. Funk-Kommunikationssystem
- mit einer Einrichtung (BSC) zur Zuweisung eines Frequenzkanals an eine Funkstation (MS),
- mit einer ersten Funkstation (BS), die gesteuert durch die Einrichtung (BSC) eine Signalisierungsmeldung (sig1) sendet, die eine Nummer (d1) des Frequenzkanals und eine Information über eine Bandbreite (d2) des Frequenzkanals enthält,
- und mit einer zweiten Funkstation (MS) zum Empfangen der Signalisierungsmeldung (sig1) und zum Benutzen des zugewiesenen Frequenzkanals zum Senden oder Empfangen,
**dadurch gekennzeichnet,**
- **daß** sowohl die Nummer (dl) des Frequenzkanals als auch die Information über die Bandbreite (d2) des Frequenzkanals auf eine gemeinsame Standardbandbreite (sbw) bezogen sind,
- so daß sowohl die Nummer (d1) als auch die Information über die Bandbreite (d2) in Form von Multiplikatoren der Standardbandbreite (sbw) in der Signalisierungsmeldung (sig1) enthalten sind.

11. Funk-Kommunikationssystem nach Anspruch 10, bei dem zwischen den den Funkstationen (BS, MS) zur Verfügung stehenden Frequenzkanäle nicht zu benutzende Frequenzbänder angeordnet sind.

12. Funk-Kommunikationssystem nach Anspruch 10 oder 11, bei dem die den Funkstationen (BS, MS) zur Verfügung stehenden Frequenzkanäle zumindest Teile eines Frequenzbandes eines GSM-Mobilfunknetzes umfaßen.

13. Funkstation (BS) für ein Funk-Kommunikationssystem nach Anspruch 10 zum Empfangen einer Signalisierungsmeldung (sig1), die eine Nummer eines zugewiesenen Frequenzkanals und eine Information über eine Bandbreite des Frequenzkanals enthält, und zum Benutzen des zugewiesenen Frequenzkanals zum Senden oder Empfangen, **dadurch gekennzeichnet, daß** sowohl die Nummer des Frequenzkanals als auch die Information über die Bandbreite des Frequenzkanals auf eine gemeinsame Standardbandbreite bezogen sind, so daß sowohl die Nummer als auch die Information über die Bandbreite in Form von Multiplikatoren der Standardbandbreite in der Signalisierungsmeldung enthalten sind, wobei die Funkstation Mittel umfaßt zum Auswählen der Standardbandbreite (sbw) als zu benutzende Bandbreite (d2) falls die Information über die Bandbreite (d2) in der Signalisierungsmeldung (sig1) fehlt.

## Claims

1. Method for assigning a frequency channel to a radio station (MS, BS) of a radiocommunications system, in which
- a signalling message (sig1) is transmitted from a first radio station (BS) to a second radio station (MS), which signalling message (sig1) contains a number (d1) of the frequency channel (d1) and information relating to a bandwidth (d2) of the frequency channel,
- the signalling message (sig1) is received by the second radio station (MS),
- and the second radio station (MS) uses the signalled frequency channel for transmission or reception, **characterized**
- **in that** both the number (d1) of the frequency channel and the information relating to the bandwidth (d2) of the frequency channel refer to a common standard bandwidth (sbw),
- so that both the number (d1) and the information relating to the bandwidth (d2) are contained, in the form of multipliers of the standard bandwidth (sbw), in the signalling message (sig1).

2. Method according to Claim 1, in which the bandwidth (d2) is equal to the standard bandwidth (sbw) or a multiple thereof.

3. Method according to one of the preceding claims, in which the number (d1) indicates frequency channel whose distance from a reference frequency (fbez) is equal to the standard bandwidth (sbw) or a multiple thereof.

4. Method according to Claim 3, in which the start, that is to say the lowest or highest frequency, of the frequency channel is indicated by the number (d1).

5. Method according to Claim 3, in which the centre of the frequency channel is indicated by the number (d1).

6. Method according to one of the preceding claims, in which the reference frequency (fbez) is defined in both radio stations (BS, MS).

7. Method according to one of the preceding claims, in which the standard bandwidth (sbw) is equal to 200 kHz.

8. Method according to one of Claims 1 to 6, in which the standard bandwidth (sbw) is equal to the most frequently expected bandwidth.

9. Method according to one of Claims 1 to 6, in which the standard bandwidth (sbw) is equal to the smallest of carrier bandwidths of different radiocommunications networks.

10. Radiocommunications system
- having a device (BSC) for assigning a frequency channel to a radio station (MS),
- having a first radio station (BS) which, under the control of the device (BSC), transmits a signalling message (sig1), which contains a number (d1) of the frequency channel and information relating to a bandwidth (d2) of the frequency channel,
- and having a second radio station (MS) for receiving the signalling message (sig1) and for using the assigned frequency channel for transmitting or receiving, **characterized**
- **in that** both the number (d1) of the frequency channel and the information relating to the bandwidth (d2) of the frequency channel refer to a common standard bandwidth (sbw),
- so that both the number (dl) and the information relating to the bandwidth (d2) are contained, in the form of multipliers of the standard bandwidth (sbw), in the signalling message (sig1).

11. Radiocommunications system according to Claim 10, in which the frequency bands which are not to be used are arranged between the frequency channels which are available to the radio stations (BS, MS).

12. Radiocommunications system according to Claim 10 or 11, in which the frequency channels which are available to the radio stations (BS, MS) comprise at least parts of a frequency band of a GSM mobile radio network.

13. Radio station (BS) for a radiocommunications system according to Claim 10 for receiving a signalling message (sig1), which contains a number of an assigned frequency channel and information relating to a bandwidth of the frequency channel, and for using the assigned frequency channel for transmitting or receiving, **characterized in that** both the number of the frequency channel and the information relating to the bandwidth of the frequency channel refer to a common standard bandwidth, so that both the number and the information relating to the bandwidth are contained, in the form of multipliers of the standard bandwidth, in the signalling message (sig1), the radio station comprising means for selecting the standard bandwidth (sbw) as the bandwidth (d2) to be used if the information relating to the bandwidth (d2) is not present in the signalling message (sig1).

## Revendications

1. Procédé destiné à l'assignation d'un canal de fréquences à une station radio (MS, BS) d'un système de radiocommunication dans lequel
- une première station radio (BS) envoie, à une deuxième station radio (MS), un message de signalisation (sig1) qui comporte un numéro (d1) du canal de fréquences et une information concernant une largeur de bande (d2) du canal de fréquences,
- le message de signalisation (sig1) est reçu par la deuxième station radio (MS)
- et la deuxième station radio (MS) utilise le canal de fréquences signalisé pour émettre et recevoir
**caractérisé par le fait**
- **que**, non seulement le numéro (d1) du canal de fréquences, mais aussi l'information concernant la largeur de bande (d2) du canal de fréquences se rapportent à une largeur de bande standard (sbw) commune,
- si bien que, non seulement le numéro (d1), mais aussi l'information concernant la largeur de bande (d2) sont contenus dans le message de signalisation (sig1) sous la forme de multiplicateurs de la largeur de bande standard (sbw).

2. Procédé selon la revendication 1 dans lequel
la largeur de bande (d2) est égale à la largeur de bande standard (sbw) ou à l'un de ses multiples.

3. Procédé selon l'une des revendications précédentes dans lequel le numéro (d1) désigne un canal de fréquences distant d'une fréquence de référence (fbez) d'une valeur égale à la largeur de bande standard (sbw) ou à l'un de ses multiples.

4. Procédé selon la revendication 3 dans lequel
le numéro (d1) indique le début, par conséquent la fréquence la plus basse ou la plus haute du canal de fréquences.

5. Procédé selon la revendication 3 dans lequel
le numéro (d1) indique le milieu du canal de fréquences.

6. Procédé selon l'une des revendications précédentes dans lequel la fréquence de référence (fbez) est définie dans les deux stations radio (BS, MS).

7. Procédé selon l'une des revendications précédentes dans lequel la largeur de bande standard (sbw) est égale à 200 kHz.

8. Procédé selon l'une des revendications 1 à 6 dans lequel la largeur de bande standard (sbw) est égale à la largeur de bande attendue le plus fréquemment.

9. Procédé selon l'une des revendications 1 à 6 dans lequel la largeur de bande standard (sbw) est égale à la plus petite des largeurs de bandes porteuses de différents réseaux de radiocommunication.

10. Système de radiocommunication comportant
- un dispositif (BSC) destiné à l'assignation d'un canal de fréquences à une station radio (MS),
- une première station radio (BS) qui, contrôlée par le dispositif (BSC), envoie un message de signalisation (sig1), lequel renferme un numéro (d1) du canal de fréquences et une information concernant une largeur de bande (d2) du canal de fréquences,
- et une deuxième station radio (MS), destinée à recevoir le message de signalisation (sig1) et à utiliser le canal de fréquences assigné pour émettre et recevoir
**caractérisé par le fait**
- **que**, non seulement le numéro (d1) du canal de fréquences, mais aussi l'information concernant la largeur de bande (d2) du canal de fréquences se rapportent à une largeur de bande standard (sbw) commune,
- si bien que, non seulement le numéro (d1), mais aussi l'information concernant la largeur de bande (d2) sont contenus dans le message de signalisation (sig1) sous la forme de multiplicateurs de la largeur de bande standard (sbw).

11. Système de radiocommunication selon la revendication 10 dans lequel sont disposées, entre les canaux de fréquences disponibles pour les stations radio (BS, MS), des bandes de fréquences à ne pas utiliser.

12. Système de radiocommunication selon la revendication 10 ou 11 dans lequel les canaux de fréquences disponibles pour les stations radio (BS, MS) renferment au moins des parties d'une bande de fréquences d'un réseau de radio mobile GSM.

13. Station radio (BS), destinée à un système de radiocommunication selon la revendication 10 et prévue pour recevoir un message de signalisation (sig1), qui renferme un numéro d'une bande de fréquence assignée et une information concernant une largeur de bande du canal de fréquences, et pour utiliser le canal de fréquences assigné pour émettre et recevoir
**caractérisée par le fait que**
non seulement le numéro du canal de fréquences, mais aussi l'information concernant la largeur de bande du canal de fréquences se rapportent à une largeur de bande standard commune, si bien que, non seulement le numéro, mais aussi l'information concernant la largeur de bande sont contenus dans le message de signalisation sous la forme de multiplicateurs de la largeur de bande standard, la station radio comportant des moyens destinés à choisir la largeur de bande standard (sbw) comme largeur de bande (d2) à utiliser, dans le cas où l'information concernant la largeur de bande (d2) manque dans le message de signalisation (sig1).
